Europäisches Patentamt

European Patent Office

Office européen des brevets

(19)

(11) Publication number: **0 084 958**
**B1**

(12) EUROPEAN PATENT SPECIFICATION

(45) Date of publication of patent specification: 08.04.87

(21) Application number: 83300285.0

(22) Date of filing: 20.01.83

(51) Int. Cl.⁴: **B 64 C 13/50,** H 04 B 9/00,
G 05 D 3/00

(54) Apparatus for controlling the position or movement of a member.

(30) Priority: 22.01.82 GB 8201905
20.12.82 GB 8236178

(43) Date of publication of application:
03.08.83 Bulletin 83/31

(45) Publication of the grant of the patent:
08.04.87 Bulletin 87/15

(84) Designated Contracting States:
AT BE CH DE FR IT LI LU NL SE

(56) References cited:
EP-A-0 046 875
FR-A-2 258 611
FR-A-2 371 078
FR-A-2 391 908
FR-A-2 428 236
FR-A-2 458 050
GB-A-2 019 561
US-A-3 943 357
US-A-4 302 109

(73) Proprietor: THE MARCONI COMPANY LIMITED
The Grove Warren Lane
Stanmore Middlesex HA7 4LY (GB)

(72) Inventor: Stephens, Philip Edward
22, Long Brandocks
Writtle Essex (GB)
Inventor: McGlade Stuart Michael
16, Alma Drive
Chelmsford Essex (GB)

(74) Representative: Tolfree, Roger Keith
GEC p.l.c. Central Patent Department
Chelmsford Office Marconi Research Centre
West Hanningfield Road
Great Baddow Chelmsford Essex CM2 8HN (GB)

Courier Press, Leamington Spa, England.

## Description

This invention relates to apparatus for controlling the position or movement of a member. The invention arose when considering the problems in the control of valve members in aircraft and industrial control systems.

In such applications a valve member may be used to control a mechanical source of energy. For example, in aircraft, the valve member may control the flow of hydraulic fluid to move wing flaps. In industrial control systems the valve member may control the flow of air to a pneumatic actuator of a process control valve.

Conventionally, such valve members are controlled by sending electrical signals from a control consol. In industrial control systems such electrical signals can initiate an explosion or vapours or gases.

In aircraft, such electrical signals are subject to interference from electrical, magnetic or electromagnetic disturbances arising outside the aircraft which in extreme cases may result in the pilot losing control of the aircraft. This problem is particularly acute when aircraft having non-metallic bodies are involved, because a non-metallic body cannot be used to shield conductors carrying the aforementioned signals. European patent application, publication No. EP—A—0046875 which discloses the features of the precharacterizing part of claim 1, describes an aircraft system in which modulated optical signals are used to control the position of ailerons, for example.

According to this invention there is provided apparatus for controlling the position or movement of a member, including: a source of electromagnetic energy, means for modulating the energy so as to impose on it a code defining a desired position or movement of a member at a location remote from the source, a line for conducting the modulated energy to the remote location; drive means at the remote location for driving the member; means at the remote location for generating a code defining the position or movement of the member; means for comprising the two codes; and means for controlling the drive means in dependence on the result of the comparison of the two codes characterised in that the drive means is designed to use the modulated electromagnetic energy to do mechanical work in driving the member.

In apparatus in accordance with the invention, the modulated energy provides both power for driving the member and data which enables the power to be controlled. Thus only one line path is required for both functions.

By using the invention in an aircraft or an industrial control system, various members to be controlled can be supplied with the necessary power along optical fibres, or other guides or lines for transmitting electromagnetic radiation, preferably in the optical, infra-red or ultra-violet regions of the spectrum thereby avoiding the need for electrical conductors carrying electrical power between the control consol and the members to be controlled; and avoiding the problems referred to earlier.

It may be necessary to use electricity in one region of the apparatus for generating the aforementioned electromagnetic radiation and in other regions for converting it to mechanical energy. However, any such regions are localised and can therefore be surrounded by suitable electromagnetic shielding or can be suitably protected against fire risks.

The line can be defined by a guide such as an optical fibre but such a guide is not essential and the line may simply be a path between a suitable transmitter and receiver.

It may be advantageous in some applications that means are included for converting the optical energy into electrical energy, but an opto-mechanical transducer, for example, could be employed.

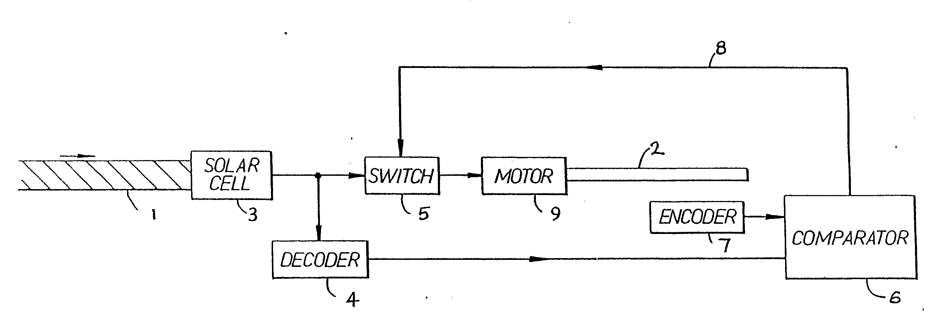

One way in which the invention may be performed is now described by way of example with reference to the accompanying drawing in which the sole Figure illustrates apparatus constructed in accordance with the invention.

With reference to the Figure, electromagnetic energy transmitted along an optical line 1 is modulated so as to carry data generated at the upstream end of the line 1. In this embodiment, the data is used to control the position of a member 2 which is powered by the electromagnetic energy, but it may be used for some other purpose. The energy impinges on a solar cell at the downstream end of the line 1 where it is converted into electrical form. This electrical power is applied to a decoder 4 and switch 5 in parallel.

The data carried by the electromagnetic energy is extracted and decoded by the decoder 4 and gives the desired position of the member 2. The decoded data is applied to a comparator 6 as is information from a position encoder 7 which is related to the actual position of the member 2. The position encoder 7 may be a 14-bit fibre optic, shaft encoder, according to the invention described in the specification of US Patent No. 4,302,109.

The comparator 6 generates a control signal which is applied to the switch 5 via a line 8 and which is dependent on the difference between the actual and desired positions of the member 2. When there is a difference the control signal operates the switch 5 so as to allow power to be transmitted from the solar cell 3 to a motor 9 which moves the member 2. When the member 2 is at its desired position as determined by the data, the switch 5 isolates the motor 9 from the power from the solar cell 3.

## Claims

1. Apparatus for controlling the position or movement of a member (2), including: a source of electromagnetic energy; means for modulating the energy so as to impose on it a code defining a desired position or movement of a member at a location remote from the source; a line (1) for conducting the modulated energy to the remote location; drive means (3, 9) at the remote location for driving the member; means (7) at the remote location for generating a code defining the position or movement of the member (2); means (6) for comparing the two codes; and means (5) for controlling the drive means in dependence on the result of the comparison of the two codes characterized in that the drive means is designed to use the modulated electromagnetic energy to do mechanical work in driving the member (2).

2. Apparatus as claimed in claim 1 in which the drive means includes means (3) for converting the electromagnetic energy into electrical energy and means (9) for converting the electrical energy into mechanical energy.

## Patentansprüche

1. Vorrichtung zum Steuern der Stellung oder der Bewegung eines Teiles (2) mit: einer Quelle elektromagnetischer Energie; Mitteln zum Modulieren der Energie, um ihr so einen eine erwünschte Stellung oder Bewegung eines an einer von der Quelle abgelegenen Stelle befindlichen Teiles definierenden Code aufzuprägen; einer Leitung (1) zum Leiten der modulierten Energie zu der abgelegenen Stelle; Antriebsmittel (3, 9) an der abgelegenen Stelle zum Antreiben des Teiles; Mittel (7) an der abgelegenen Stelle zur Erzeugung eines die Stellung oder Bewegung des Teiles (2) definierenden Codes; Mittel (6) zum Vergleichen der beiden Code; und Mittel (5) zum Steuern des Antriebsmittels in Abhängigkeit von dem Ergebnis des Vergleichs der beiden Code, dadurch gekennzeichnet, daß das Antriebsmittel zum Verwenden der modulierten elektromagnetischen Energie zur Verrichtung mechanischer Arbeit beim Antreiben des Teiles (2) ausgelegt ist.

2. Vorrichtung nach Anspruch 1, bei der das Antriebsmittel Mittel (3) zum Wandeln der elektromagnetischen Energie in elektrische Energie und Mittel (9) zum Wandeln der elektrischen Energie in mechanische Energie enthält.

## Revendications

1. Dispositif pour régler la position ou le déplacement d'un organe (2), incluant: une source d'énergie électromagnétique; un moyen pour moduler l'énergie de manière à imposer sur celui-ci un code définissant une position ou un déplacement voulu d'un organe à un emplacement éloigné de la source; une ligne (1) pour diriger l'énergie modulée jusqu'à l'emplacement éloigné; un moyen d'entraînement (3, 9) à l'emplacement éloigné pour entraîner l'organe; un moyen (7) à l'emplacement éloigné pour engendrer un code définissant la position ou le déplacement de l'organe (2); un moyen (6) pour comparer les deux codes; et un moyen (5) pour commander le moyen d'entraînement en fonction du résultat de la comparaison des deux codes, caractérisé en ce que le moyen d'entraînement est conçu pour mettre en oeuvre l'énergie électromagnétique modulée pour faire un travail mécanique en entraînant l'organe (2).

2. Dispositif selon la revendication 1, dans lequel le moyen d'entraînement comprend un moyen (3) pour convertir l'énergie électromagnétique en énergie électrique et un moyen (9) pour convertir l'énergie électrique en énergie mécanique.

SOLAR CELL  3

DECODER  4

SWITCH  5

MOTOR  9

2

ENCODER  7

COMPARATOR  6

8

1

0 084 958